(19) Europäisches Patentamt

European Patent Office

Office européen des brevets

(11) **EP 0 672 891 B2**

(12) **NEW EUROPEAN PATENT SPECIFICATION**

(45) Date of publication and mention
of the opposition decision:
**18.05.2005 Bulletin 2005/20**

(45) Mention of the grant of the patent:
**18.09.2002 Bulletin 2002/38**

(21) Application number: **95103588.0**

(22) Date of filing: **13.03.1995**

(51) Int Cl.$^7$: **G01D 5/26**, G01D 5/38

(54) **Optical displacement sensor**

Optischer Verschiebungssensor

Capteur optique de déplacement

(84) Designated Contracting States:
**DE FR GB IT NL**

(30) Priority: **14.03.1994 JP 7000494**
**07.03.1995 JP 7462095**

(43) Date of publication of application:
**20.09.1995 Bulletin 1995/38**

(73) Proprietor: **CANON KABUSHIKI KAISHA
Tokyo (JP)**

(72) Inventors:
• **Kaneda, Yasushi, c/o Canon Kabushiki Kaisha
Tokyo 146 (JP)**
• **Ishizuka, Koh, c/o Canon Kabushiki Kaisha
Tokyo 146 (JP)**

(74) Representative:
**Leson, Thomas Johannes Alois, Dipl.-Ing. et al
TBK-Patent,
P.O. Box 20 19 18
80019 München (DE)**

(56) References cited:
EP-A- 0 548 848          DE-A- 2 511 350
DE-A- 3 905 838          DE-A- 4 132 941
DE-C1- 3 810 165          DE-U- 9 218 399
US-A- 4 436 424

• WERKSTATT UND BETRIEB, vol. 124, no. 2, 1
February 1991 pages 111-113, XP 000320776
SESSELMANN T 'MASSSTAEBE FUER
INTERFERENZIELLES ABTASTEN
ERMOEGLICHEN
NANOMETER-MESSSCHRITTE'
• J. Wilhelm : Dreigitterschrittgeber (Dissertation
TU Hannover)
• German translation of JP-A-03 279 812

## Description

The present invention relates to a device for measuring relative displacement information of an object diffraction grating according to the preamble of claim 1. Such a device can be used as an optical displacement sensor which can precisely obtain the physical quantity of movement information such as the moving amount, displacement, or the like of an object by utilizing the fact that interference light beams are modulated by diffraction and interference which occur upon irradiation of light onto an object.

As a conventional optical displacement sensor of this type, an optical encoder, a laser Doppler velocimeter, a laser interferometer, and the like are available. Although these sensors have high precision and high resolution, a compact structure (on the order of mm), higher precision, higher resolution, (on the order of 0.1μm), and higher stability are required to attain application to a wider range of fields. If such a sensor has a size on the order of mm, it can be directly adhered to an object to be measured when it is used, and can be used for smaller devices. However, in this case, a mounting error easily occurs, and a countermeasure against such an error must be taken.

In the field of a detection device of movement information utilizing light, the following prior arts are known as ones effective for achieving a compact structure.

Figs. 1A and 1B are explanatory views of an optical encoder disclosed in JP-U-1-180615. Referring to Figs. 1A and 1B, the principle of measurement of this optical encoder is as follows. That is, a light beam emitted from a light-emitting element 42 passes through a hole 46A of a board 46, and is converted into a linear light beam array by a slit array 14. The linear light beam array is irradiated onto a grating on a scale 40. The grating 16 on the scale 40 is projected onto an index grating by the light beam reflected by a bottom surface 12, and the amount of light transmitted through the index grating and incident on a light-receiving element 48 on the board 46 is modulated by geometric overlap between the two gratings. Based on this principle, the encoder can be rendered compact, but its resolution is limited.

Figs. 2A and 2B are explanatory views of an optical encoder disclosed in JP-A-62-121314, and show one effective improved arrangement for making a basic optical system of an encoder using three diffraction gratings (GB-A-1474049, Leitz) compact. Referring to Figs. 2A and 2B, a light beam emitted from a light-emitting element 51 is converted into a collimated light beam by a lens 52, and is irradiated onto a grating GK(A) on an index scale A. The irradiated light beam is diffracted by the grating GK(A) and generates light beams in three different exit directions.

These light beams are diffracted by a grating GK(B) on a scale B, are phase-modulated by relative movement, and the modulated light beams return to the grating GK(A) on the index scale A. Upon diffraction by the grating on the index scale, the three pairs of interference light beams are incident on light-receiving elements arranged in different directions. With this arrangement, both a compact structure and high resolution are compatible.

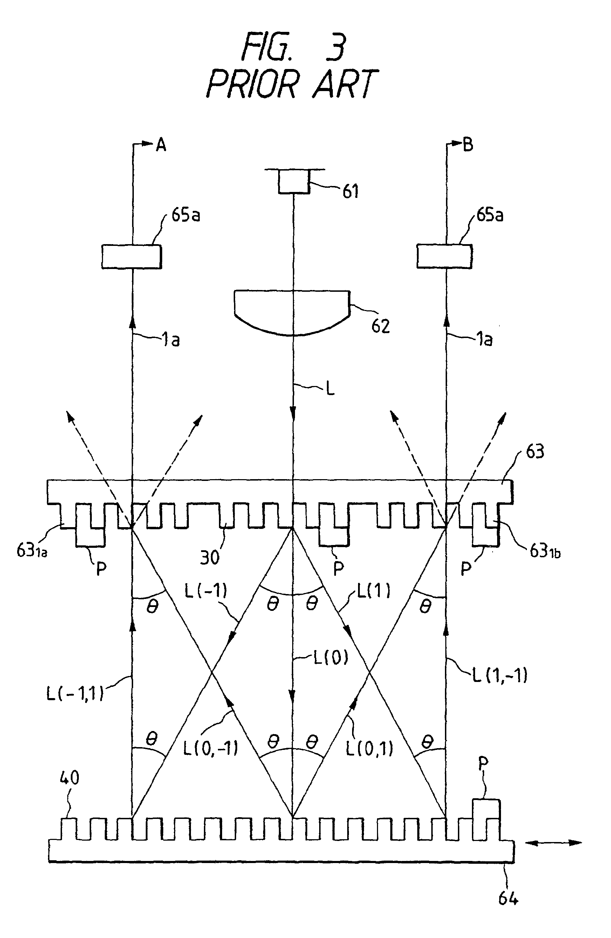

Fig. 3 is an explanatory view of an optical encoder disclosed in JP-A-3-279812, and shows an example which is effective for simultaneously attaining high precision and a simple compact structure. The encoder shown in Fig. 3 includes a light-emitting element 61, a lens 62, diffraction gratings 63 and 64, and light-receiving elements 65a and 65b.

In the encoders of the above-mentioned prior arts, the optical path of light emitted from a light-emitting source is split into two or more, and interference light of the split beams is received. At this time, since a light beam perpendicularly incident on a split grating is used, and light beams almost perpendicularly emerging from a grating for mixing light beams are used as interference light, diffracted light beams which emerge to the right and left sides of the sensor tend to become stray light beams. In addition, since the above-mentioned arrangement requires a predetermined space between the light source side and the sensor side, a compact structure is difficult to achieve as a whole. Therefore, it is difficult to constitute a displacement sensor which has a further compact structure and higher resolution.

US-A-4 436 424 discloses an interferometer comprising a polarization beam splitter for splitting/combining light beams.

DE-A-3 905 838 discloses an optical linear encoder, wherein the light transmitted by a first grating is selected and transmitted by a second grating. The light transmitted by the second grating is focused onto a photodetector section. Two light-receiving elements are arranged to receive light beams with an inclination relative to the second diffraction grating (i.e. the ± 2nd order diffracted beams) with respect to the grating arrangement direction of the second diffraction grating. The second diffraction grating is used for forming a Moiré-image. Moreover, the converted electrical signals from the respective light-receiving elements are added and, thus, a correct displacement signal is obtained.

DE-A-2 511 350 shows a device for measuring relative displacement information of an object using gratings. The gratings are arranged either to perform a shuttering effect for producing a cyclical variation in the light intensity or to produce a diffuse illumination. The gratings also function as diffraction gratings.

A further device for measuring relative displacement information of an object diffraction grating is known from EP-A-0 548 848. The light beam is irradiated onto the splitting diffraction grating in a perpendicular direction with respect to the grating arrangement direction of the splitting diffraction grating. In addition, the light-receiving element receives the light beam from the mixing diffraction grating in a perpendicular direction with respect to the grating arrangement direction of the mixing diffraction grating. Since the angle of the mirror is selected to be larger than 45°, the light beam is irradiated onto the splitting diffraction grating with an inclination with respect to a direction perpendicular to the grating arrangement direction.

A generic device for measuring relative displacement information of an object diffraction grating is known from DE-B-38 10 165. It comprises an illumination system for forming an illumination light beam. A splitting diffraction grating splits the illumination light beam from the illumination system into at least two diffracted beams. The splitting diffraction grating is arranged at a position between the illumination system and the object diffraction grating. A mixing diffraction grating mixes at least two diffracted beams which have been reflected and diffracted by the object diffraction grating. The mixing diffraction grating is arranged at a position between a light receiving element and the object diffraction grating in the vicinity of the splitting diffraction grating. Furthermore, the mixing diffraction grating is arranged on the same side of the splitting diffraction grating with respect to the object diffraction grating. The light-receiving element receives a light beam mixed by the mixing diffraction grating. Relative displacement information of the object diffraction grating is detected based on the light received by the light-receiving element. The illumination system is arranged to irradiate the light beam onto the splitting diffraction grating with a non-perpendicular inclination relative to the splitting diffraction grating with respect to a grating arrangement direction of the splitting diffraction grating. The mixing diffraction grating makes at least two outgoing light beams substantially coincident by diffracting at least one of the light beams reflected and diffracted by the object diffraction grating. The mixing is performed by the coincidence of the outgoing light beams.

It is an object of the present invention to further develop a device for measuring relative displacement information of an object diffraction grating according to the preamble of claim 1 such that the device has a more compact structure and a higher resolution.

This object is achieved by the device as defined in claim 1.

Advantageous further developments are set out in the dependent claims.

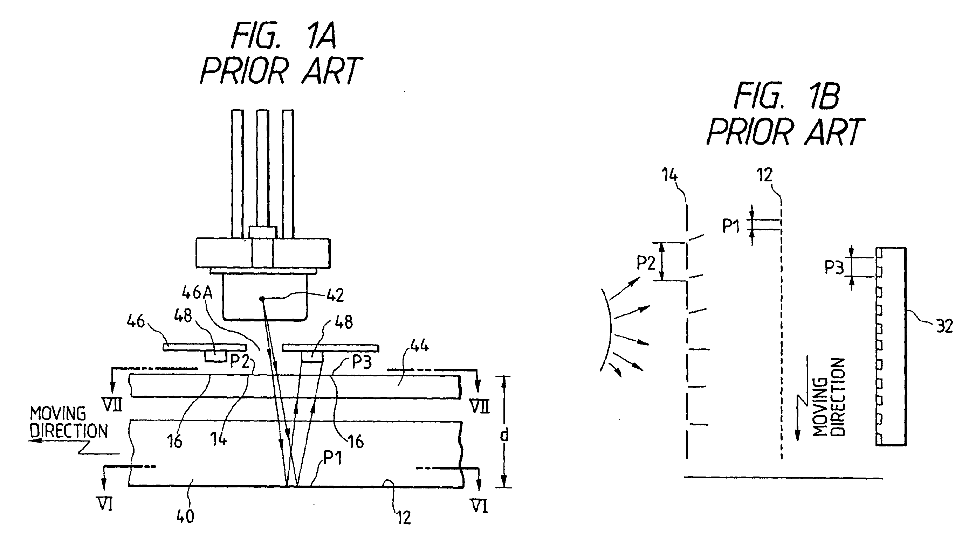

Figs. 1A and 1B are schematic views showing a principal part of a conventional optical encoder;

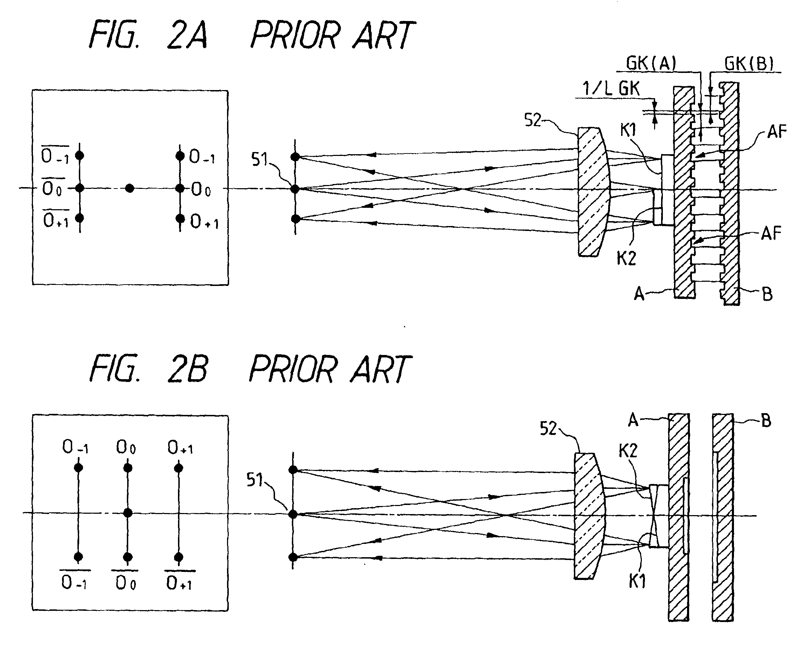

Figs. 2A and 2B are schematic views showing a principal part of another conventional optical encoder;
Fig. 3 is a schematic view showing a principal part of still another conventional optical encoder;
Fig. 4 is a perspective view showing a principal part of a first comparative example;
Figs. 5A and 5B are schematic views showing a principal part of the frist comparative example;

Fig. 6 is an explanatory view showing the direction of an azimuth angle in an optical encoder;
Fig. 7 is an explanatory view showing a state wherein interference fringes are generated when a mounting error occurs between the azimuth angles of a head unit and a scale unit in an optical encoder;
Fig. 8 is an explanatory view showing the direction of a rotation angle in an optical encoder;
Fig. 9 is an explanatory view showing a state wherein interference fringes are generated when a mounting error occurs between the rotation angles of a head unit and a scale unit in an optical encoder;
Figs. 10A and 10B are explanatory views showing the relationship among the angle difference between two interference light beams, the azimuth angle, and (wavelength/grating pitch) when a mounting error occurs between the azimuth angles of the head unit and the scale unit;
Figs. 11A and 11B are explanatory views showing the relationship among the angle difference between two interference light beams, the azimuth angle, and (wavelength/grating pitch) when a mounting error occurs between the rotation angles of the head unit and the scale unit;
Figs. 12A and 12B are explanatory views showing the relationship among the crossing point between two interference light beams, the azimuth angle, and (wavelength/grating pitch) when a mounting error occurs between the azimuth angles of the head unit and the scale unit;
Figs. 13A and 13B are explanatory views showing the relationship among the crossing point between two interference light beams, the azimuth angle, and (wavelength/grating pitch) when a mounting error occurs between the rotation angles of the head unit and the scale unit;
Fig. 14 is a perspective view showing principal part of a second comparative example;
Figs. 15A and 15B are schematic views showing a principal part of the second comparative example;
Figs. 16A and 16B are schematic views showing a principal part of a third comparative example;
Figs. 17A and 17B are schematic views showing a principal part of a fourth comparative example not claimed ; and
Figs. 18A and 18B are schematic views showing a principal part of the only embodiment of the present invention.

A preferred embodiment is described in the following with reference to the drawings.

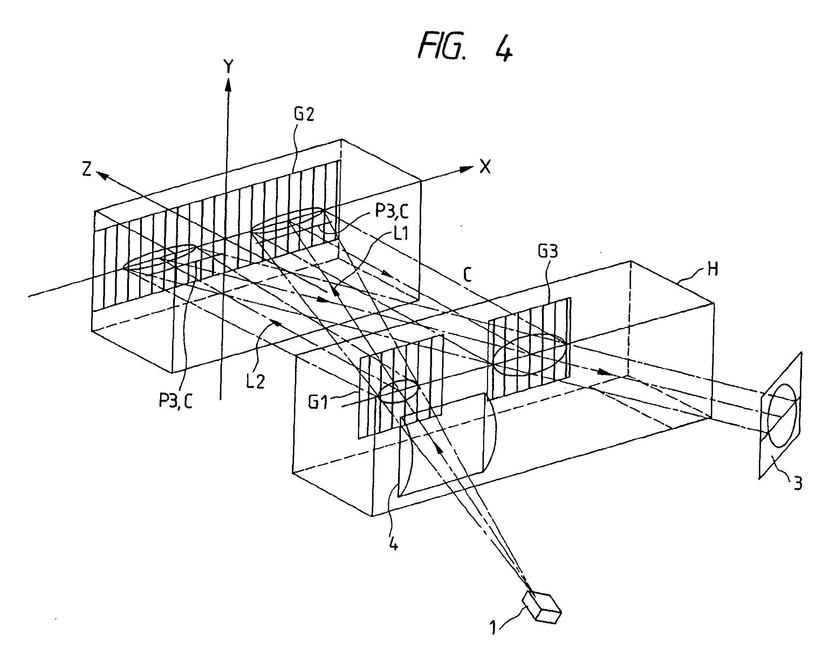

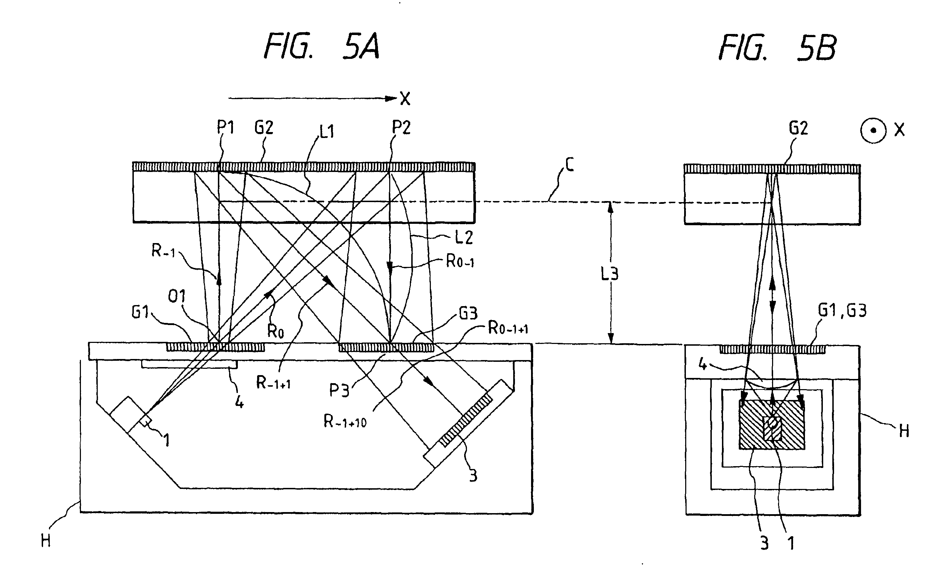

Fig. 4 is an optical path perspective view showing a first comparative example of an optical displacement sensor and Figs. 5A and 5B are respectively a plan view (Fig. 5A) and a side view (Fig. 5B) showing the optical path of the first comparative example. Referring to Fig. 4 and Figs. 5A and 5B, the sensor includes a head unit H, a light-emitting element 1, a light-receiving element 3, and a first diffraction grating G1. The first diffraction grating G1 splits a light beam emitted from the light-emitting element 1. A second diffraction grating G2 serves as a scale for phase-modulating a plurality of light beams split by the first diffraction grating G1. A third diffraction grating G3 mixes a plurality of diffracted light beams of predetermined orders from the second diffraction grating. A cylindrical lens 4 as an optical element condenses the light beam from the light-emitting element 1 in only the grating line direction of the first diffraction grating G1.

The light-emitting element 1, the optical element 4, and the first diffraction grating G1 constitute one element of light projection means, the second diffraction grating G2 constitutes one element of modulation means, and the third diffraction grating G3 and the light-receiving element 3 constitute one element of light-receiving means. Note that the light projection means and the light-receiving means constitute one element of the head unit H.

The principle of measurement of relative displacement information between the second and third diffraction gratings G2 and G3 will be explained below. A divergent light beam emitted from the light-emitting element 1 is converted by the cylindrical lens 4 into a wave surface state in that the light beam is convergent in the grating line direction (Y-direction) of the first diffraction grating G1 by the cylindrical lens 4, and is divergent from the light source in the split direction of light beams, i.e., the grating arrangement direction (X-direction) of the first diffraction grating G1. The converted light beam is transmission-diffracted at point O1 on the first diffraction grating G1 to be split into three light beams, i.e., a 0th-order diffracted light beam $R_0$, a +1st-order diffracted light beam $R_{+1}$, and a -1st-order diffracted light beam $R_{-1}$, and these light beams emerge from the first diffraction grating G1.

In this comparative example, of these light beams, only the 0th- and -1st-order diffracted light beams $R_0$ and $R_{-1}$ are utilized.

In this comparative example, the light beam from the light-emitting element 1 is incident on the first diffraction grating G1 at the same angle as the diffraction angle of an nth-order (-1st-order) diffracted light beam from the first diffraction grating (i.e., an angle defined with the 0th-order diffracted light beam) as an incident angle.

The light beam $R_0$ which is transmitted straight through the first diffraction grating G1 is condensed at position C near the second diffraction grating G2 in the grating line direction of the first diffraction grating G1, and is reflected and diffracted at point P2 on the second diffraction grating G2. The diffracted light beam is split into a +1st-order diffracted light beam $R_{0+1}$ and a -1 st-order diffracted light beam $R_{0-1}$, and these light beam are phase-modulated.

In this comparative example, of these light beams, only the -1st-order diffracted light beam $R_{0-1}$ is

utilized. The phase of the -1st-order diffracted light beam $R_{0-1}$ is shifted by $-2\pi\Delta x/P$. Note that $\Delta x$ is the moving amount, in the X-direction, of the second diffraction grating G2, and P is the pitch of the second diffraction grating G2.

The -1st-order diffracted light beam $R_{0-1}$ is transmission-diffracted by the third diffraction grating G3, and is split into a 0th-order diffracted light beam $R_{0-10}$, a +1st-order diffracted light beam $R_{0-1+1}$, and other light beams. Of these light beams, the +1st-order diffracted light beam $R_{0-1+1}$ is output from the diffraction grating surface in the 1st-order diffraction direction, and the phase of its wave surface is $-2\pi\Delta x/P$.

The light beam $R_{-1}$, which is -1st-order-diffracted by the first diffraction grating G1 in a direction perpendicular thereto, is reflection-diffracted at point P1 on the second diffraction grating G2, and is split into a +1st-order diffracted light beam $R_{-1+1}$, a -1st order diffracted light beam $R_{-1-1}$, and other light beams. These light beams are phase-modulated. Of these light beams, only the +1st-order diffracted light beam $R_{-1+1}$ is utilized. The phase of the +1st-order diffracted light beam $R_{-1+1}$ is shifted by $+2\pi\Delta x/P$. The +1 st-order diffracted light beam $R_{-1+1}$ is condensed in the grating line direction of the first diffraction grating G1 at the position C near the second diffraction grating G2, and is then incident on the third diffraction grating G3. Of the light beams diffracted by the third diffraction grating G3, a 0th-order diffracted light beam $R_{-1+10}$, which is transmitted straight through the third diffraction grating G3, is utilized. The phase of this wave surface is $+2\pi\Delta x/P$.

In this comparative example, the respective elements are set so that the light beam $R_{0-1+1}$ emerges from the third diffraction grating G3 at an exit angle which is equal to the diffraction angle of an nth-order diffracted light beam by the first diffraction grating G1 of the light beam from the light-emitting element 1.

The light beams $R_{-1+10}$ and $R_{0-1+1}$ whose optical paths are caused to overlap each other by the third diffraction grating G3 are incident on the light-receiving element 3 as interference light. The interference phase at this time is:

$$\{+2\pi\Delta x/P\} - \{-2\pi\Delta x/P\} = 4\pi\Delta x/P$$

Thus, when the second diffraction grating G2 as a scale deviates by a P/2 pitch in the grating arrangement direction, a bright and dark signal for one period is generated.

The relationship among mounting error angles $\phi$ and $\eta$, the angle difference $\theta$ between two interference light beams, and (the wavelength $\lambda$ of light)/(the diffraction grating pitch P) will be explained below.

Referring to Fig. 4, if the vector of a ray of light, which is transmitted through the cylindrical lens 4 and perpendicularly incident on the first diffraction grating G1, of light emitted by the light-emitting element is rep-

resented by $u_0$ ($u_{0x}$, $u_{0y}$, $u_{0z}$), and m is the order of diffraction, a directional vector $u_1$ ($u_{1x}$, $u_{1y}$, $u_{1z}$) of mth-order light, which is transmission-diffracted by the first diffraction grating G1, is known to satisfy the following relations (Px and Py are respectively the pitches, in the x- and y-directions, of the diffraction grating, and the diffraction grating is present in the x-y plane):

$$
(1) \quad \begin{cases}
u_{1x} = u_{0x} + m\lambda/Px \\
u_{1y} = u_{0y} + m\lambda/Py \\
u_{0x}^2 + u_{0y}^2 + u_{0z}^2 = 1 \\
u_{1x}^2 + u_{1y}^2 + u_{1z}^2 = 1
\end{cases}
$$

Based on this relationship, the angle difference e between the two light beams $R_{-1+10}$ and $R_{0-1+1}$, which are transmission-diffracted by the third diffraction grating G3 and interfere with each other, is:
(for $\lambda/P = s$)

$$\theta = \cos^{-1}[(2s)^2(\cos\eta - 1) + 1]$$

$$\theta = -\phi - \sin^{-1}\{s + \sin[\phi - \sin^{-1}(s)]\}$$
$$+ \sin^{-1}\{s + \sin[\phi - \sin^{-1}(s - \sin\phi)]\}$$

If $\theta$ and $\phi$ are assumed to be minute angles, approximations up to the second order are:

$$(2) \quad \theta = 2s\eta \quad (\eta: \text{azimuth angle})$$

$$(3) \quad \theta = s\phi^2/[(1 - s^2)^{1/2}] \quad (\phi: \text{rotation angle})$$

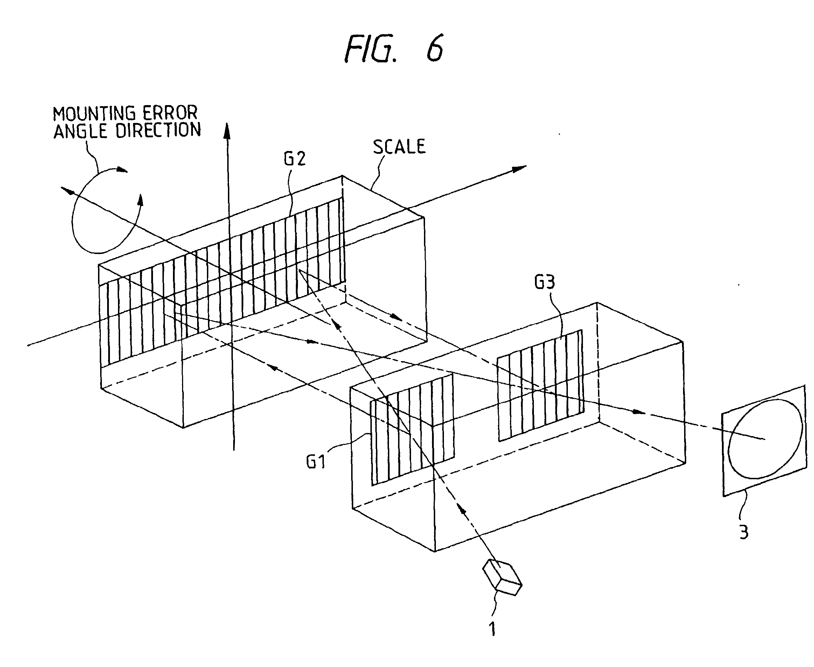

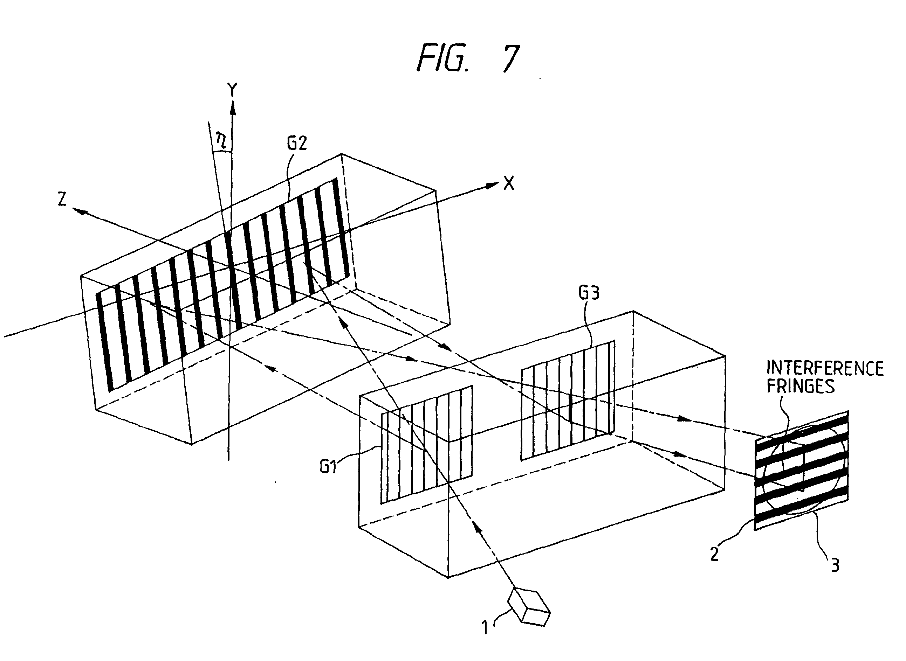

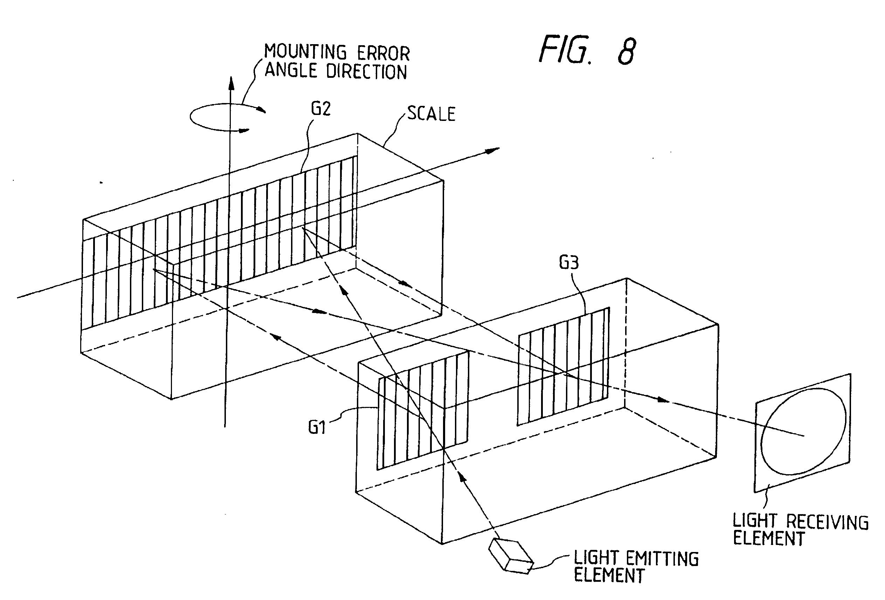

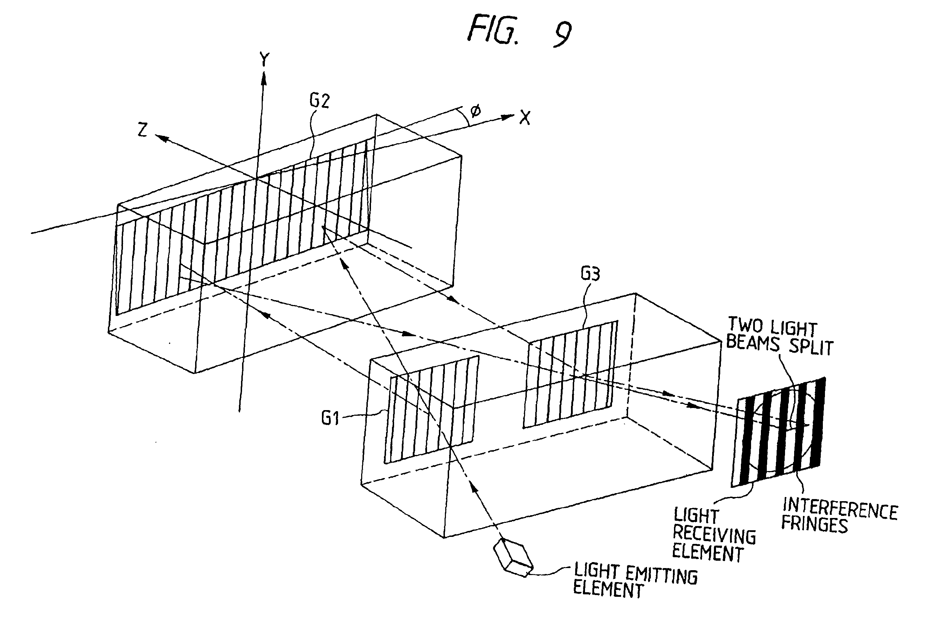

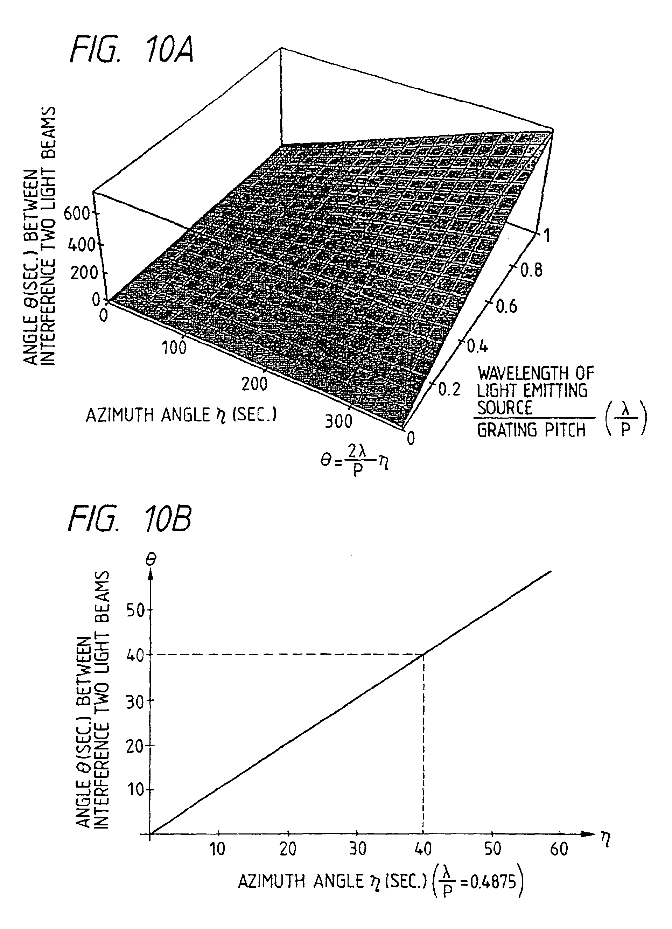

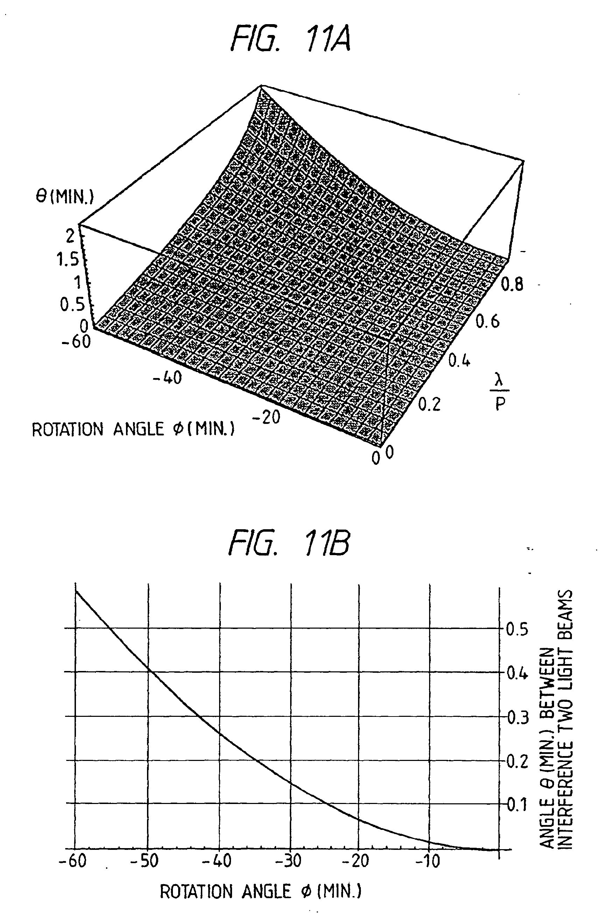

When a mounting error (azimuth angle $\eta$) shown in Fig. 6 is given, the angle difference $\theta$ between the interference two light beams $R_{-1+10}$ and $R_{0-1+1}$ is generated in the y-z plane in Fig. 4 (see Fig. 7). On the other hand, when a mounting error (rotation angle $\phi$) shown in Fig. 8 is given, the angle difference $\theta$ is generated in the x-z plane in Fig. 4 (see Fig. 9). Figs. 10A and 11A show this relationship. If $\lambda = 0.78 \mu m$ and P = 1.6 $\mu m$, the relationships shown in Figs. 10B and 11B are obtained.

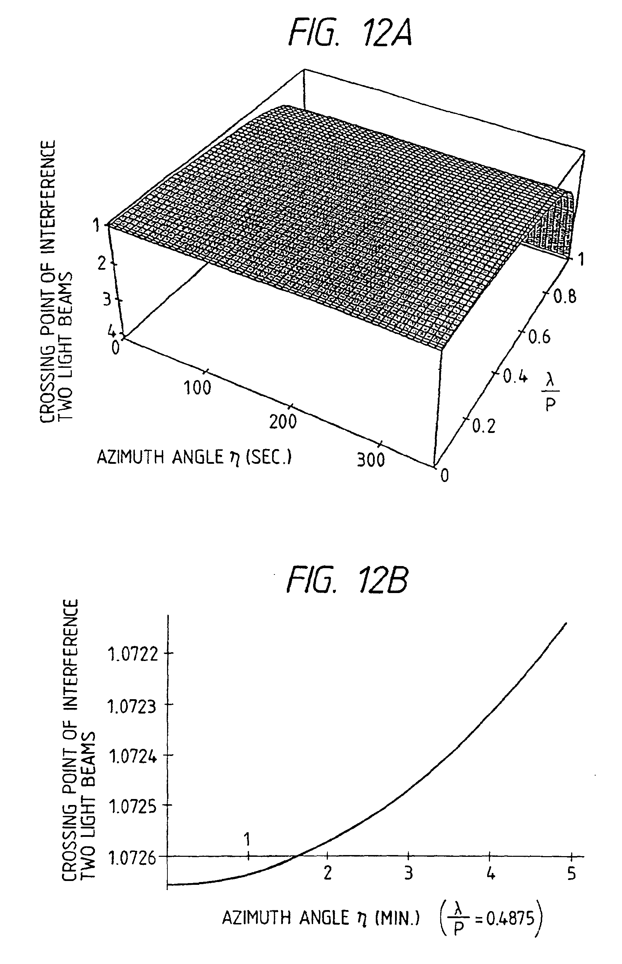

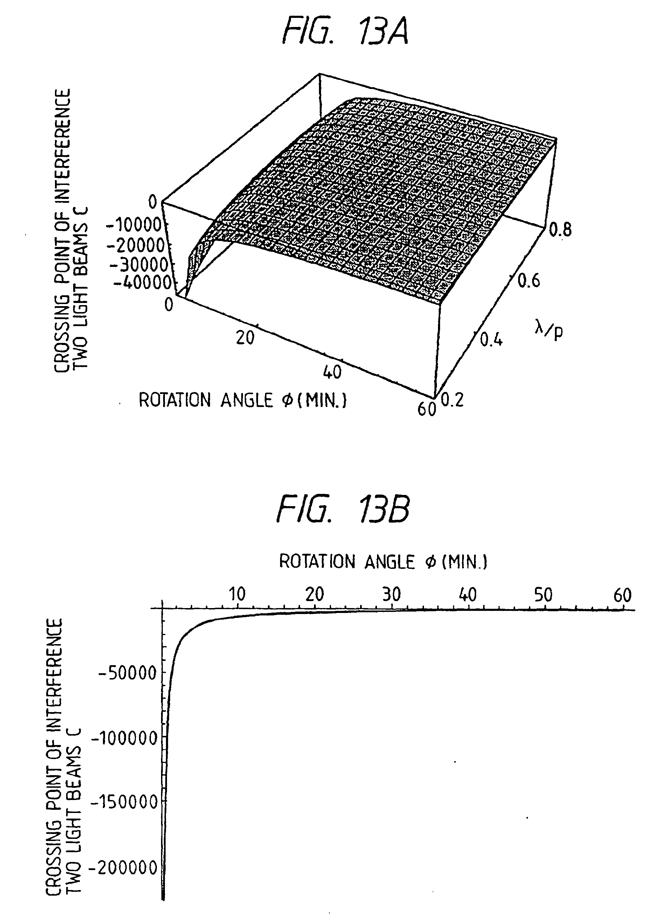

Then, the position C of the crossing point, viewed from the sensor, between the interference two light beams $R_{-1+10}$ and $R_{0-1+1}$, when the second diffraction grating G2 suffers a mounting error, is calculated. Upon evaluation using the above-mentioned relationships (1) to (3), and an optical path length L3 from the second diffraction grating G2 to the third diffraction grating G3 (see Figs. 5A and 5B) as a unit length, the crossing point C when the second diffraction grating G2 suffers the azimuth angle $\eta$ shown in Fig. 6 is as shown in Fig. 12A; the crossing point C when the second diffraction grating G2 suffers the rotation angle $\phi$ shown in Figs. 11A and 11B is as shown in Fig. 13A. Note that the sign of the crossing point C is defined to be minus in the direction of the sensor and plus in the direction of the second diffraction grating G2 to have the third diffraction grating G3 as an origin.

More specifically, when the second diffraction grating G2 suffers the azimuth angle $\eta$, the interference two light beams are separated in the grating line direction of the third diffraction grating, and cross each other in the vicinity of the second diffraction grating when they are viewed from the sensor surface in the direction of the third diffraction grating G3. The crossing point C is a position corresponding to (L1 + L2)/2 where L1 and L2 are the optical path lengths from the second diffraction grating to the third diffraction grating of the two split light beams $R_{-1+10}$ and $R_{0-1+1}$.

In Figs. 5A and 5B, the optical path length of the light beam $R_{-1+1}$ extending from the point P1 to the point P3 corresponds to L1, and the optical path length of the light beam $R_{0-1}$ extending from the point P2 to the point P3 corresponds to L2.

When the third diffraction grating G3 suffers the rotation angle $\phi$, the interference two light beams are separated in the grating arrangement direction of the third diffraction grating G3, and appear to cross each other at a very far point when they are viewed in a direction opposite to the direction of the third diffraction grating G3 from the sensor surface 3. If P = 1.6 $\mu m$ and $\lambda = 0.78 \mu m$, the crossing point C between the interference two light beams is as shown in Figs. 12B and 13B.

In order to stabilize the interference state between the two light beams, the two beams are condensed in the vicinity of the second diffraction grating G2 in the grating line direction of the first diffraction grating G1 (this condensing position is set to match the crossing point C in Fig. 4; that is, the position of L3 = (L1 + L2)/2), and are collimated beams (plane waves) or spherical waves with a very large radius of curvature (divergent light from the light-emitting element in this case) in the grating arrangement direction of the first diffraction grating G1.

As can be seen from Figs. 11A and 11B, even when the rotation angle $\phi$ is given to the second diffraction grating G2, the angle difference $\theta$ between the interference two light beams does not become so large, but the two light beams are separated from each other. For this reason, when the two light beams are spherical waves with a small radius of curvature in this direction, interference fringes tend to form, and the interference state is not stable. However, if the two light beams are plane waves or spherical waves with a very large radius of curvature (spherical waves with a very large radius of curvature which can be regarded as plane waves), the angle difference θ between the two light beams does not become so large, interference fringes do not easily form, and the interference state is stabilized.

Therefore, when the two light beams have a wave surface state with a large radius of curvature, at which the wave surface can be substantially regarded as a plane, or have a radius of curvature approximate thereto, in the grating arrangement direction of the first diffraction grating G1, the interference fringes do not easily form, and the interference state is stabilized.

As for the grating line direction of the first diffraction grating G1, as can be seen from Figs. 12A and 12B, in a region of λ/P < 0.8, the crossing point C between the two light beams is almost constant regardless of the azimuth angle η. However, as can be seen from Figs. 10A and 10B, the angle difference θ between the interference two light beams increases in proportion to the azimuth angle η.

As can be understood from the above description, when the condensing direction the light beam emitted from the light-emitting element 1 is set to be the grating line direction of the first diffraction grating G1, and the condensing position is set in the same region as the crossing point C between the interference light beams, the wave surfaces of the two light beams overlap each other even when the angle difference θ between the two light beams is large, and the optical path lengths L1 and L2 become always constant irrespective of the azimuth angle η. For this reason, the interference fringes do not easily form, and the interference state is stabilized.

In this comparative example, since unnecessary diffracted light is generated on the side of the position of the light-emitting element 1 of the sensor 3, an arrangement for shielding stray light can be easily adopted.

In this comparative example, for the above-mentioned reasons, since the two light beams are set to be divergent light from the light source in the grating arrangement direction of the first diffraction grating G1, the radius of curvature of each of the light beams is set as large as possible, and the light beams are set to be convergent light in the grating line direction, an encoder whose output is insensitive to the rotation angle and the azimuth angle, and which is easy to handle can be realized.

In the first comparative example, the entire interference optical system is very simple, and since the head unit is constituted by only the light-emitting element 1, the light-receiving element 3, the cylindrical lens 4, the first diffraction grating G1, and the third diffraction grating G3, its structure is simple and has a small number of components, thus allowing easy assembling. Furthermore, as shown in Fig. 4 and Figs. 5A and 5B, since the first and third diffraction gratings G1 and G3 and the cylindrical lens 4 are formed on a single board, the number of components can be further reduced, thereby realizing a low-cost, very compact structure.

Since the emitted light beam is condensed in the grating line direction of the first diffraction grating G1, and is set to be divergent light (a spherical wave with a very large radius of curvature) from the light-emitting element 1 in the grating arrangement direction, an optical system whose interference state depends on the angle error between the scale G2 and the head unit can be realized, and a compact encoder which is easy to handle can be provided.

Furthermore, since light beams, in the direction of 1st-order diffraction, of those perpendicularly incident on the third diffraction grating G3 for synthesizing the interference two light beams are utilized, signal light (interference two light beams) can be easily isolated from other unnecessary diffracted light components which are transmission-diffracted by the third diffraction grating G3 for synthesizing the interference two light beams.

Since the light-emitting element 1 and the sensor 3 can be easily spatially separated, and an arrangement for shielding unnecessary light, which is emitted from the light-emitting element 1 and reaches the sensor 3, can be easily adopted, an encoder, which can obtain a noise-less signal with a high S/N ratio, can be easily realized.

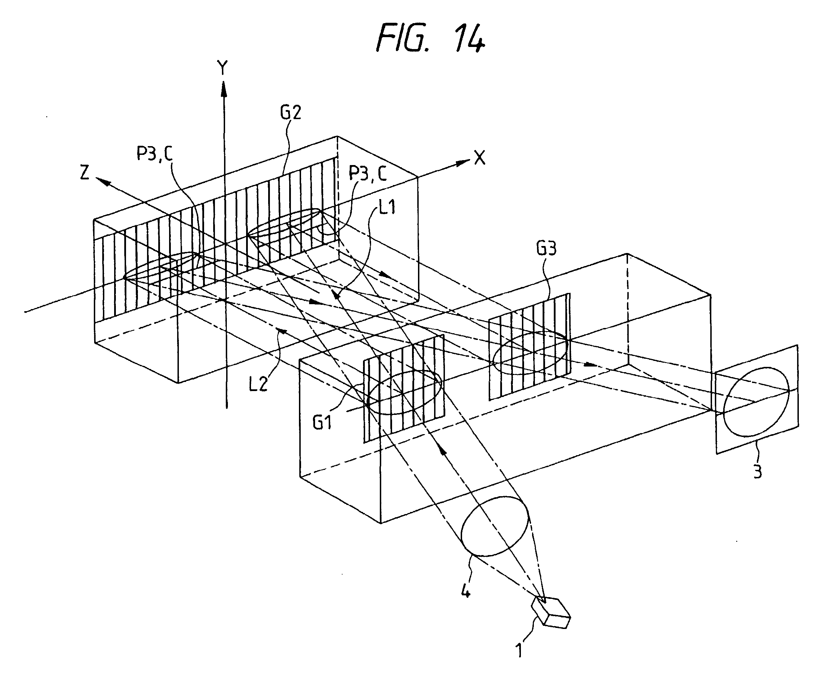

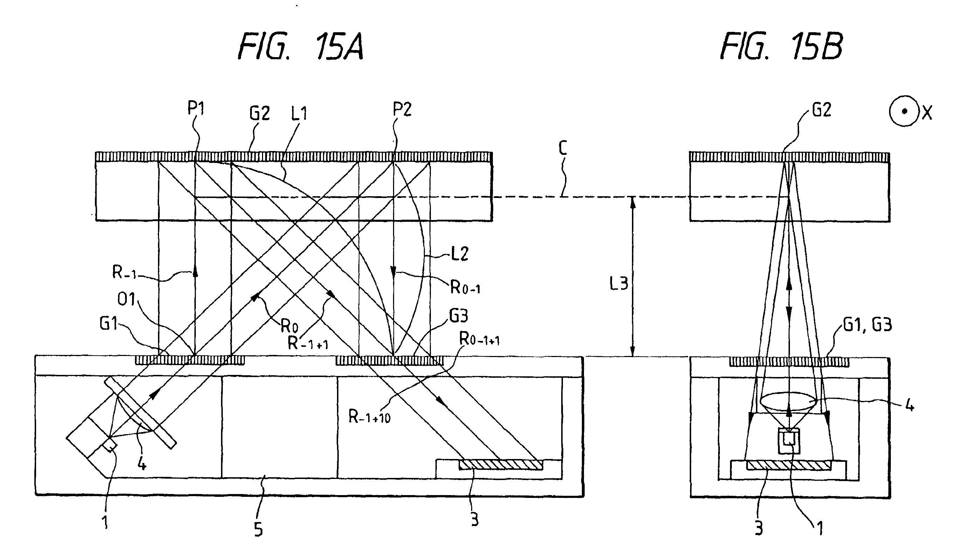

Fig. 14 is a perspective view showing the second comparative example of an optical displacement sensor, and Figs. 15A and 15B are respectively a plan view and a side view showing the optical paths of the sensor. The same reference numerals in Fig. 14 and Figs. 15A and 15B denote the same parts as in Fig. 4 and Figs. 5A and 5B.

A toric lens 4 condenses a divergent light beam emitted by the light-emitting element 1.

The principle and basic arrangement of the optical system are the same as those in the first comparative example. The wave surface state of a light emitted by the light-emitting element 1 is adjusted to be a cylindrical surface shape by the single optical element 4. Thus, the light beam can be convergent light in the grating line direction, and collimated light in the grating arrangement direction.

In addition to the effect of the first comparative example, the second comparative example can provide the following effect. More specifically, since the wave surface state of a light beam emitted by the light-emitting element 1 is adjusted to be a cylindrical surface shape by a single lens, a compact, low-cost encoder which has a simple structure and is easy to assemble can be realized.

Since the light-emitting element 1 and the light-receiving element 3 are spatially separated, stray light from the light-emitting element 1 can be easily shielded, and a noise-less signal with a high S/N ratio can be obtained.

In each of the above comparative examples, a Fresnel lens may be used as the optical element.

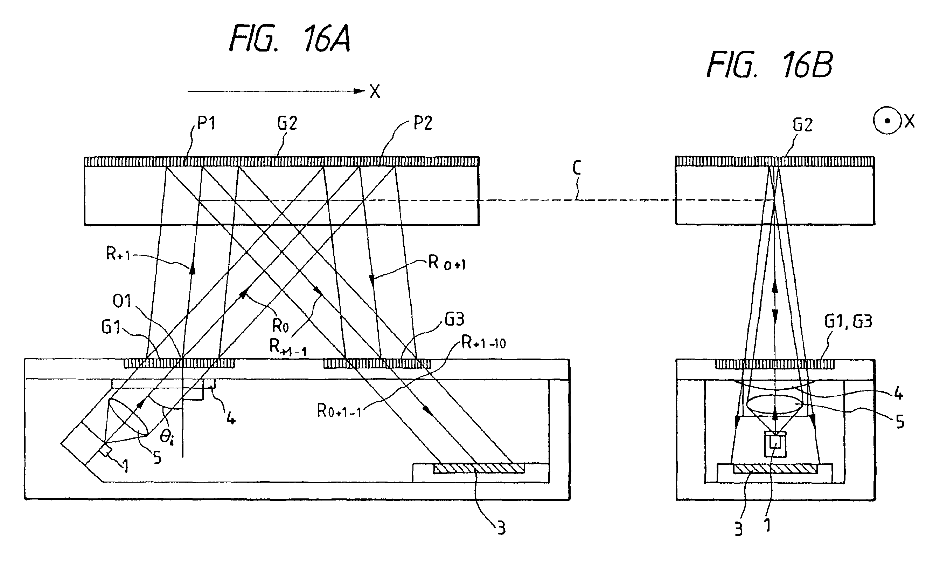

Figs. 16A and 16B are respectively a plan view and a side view showing the third comparative example of an optical displacement sensor. The same reference numerals in Figs. 16A and 16B denote the same parts as in Figs. 5A and 5B. In Figs. 16A and 16B, a collimator lens 5 collimates a light beam emitted by the light-emitting element to substantially collimated light, and a cylindrical lens 4 condenses the light beam in the grating line direction.

The principle and basic arrangement of the optical system are the same as those in the second comparative example. A light beam emitted by the light-emitting element 1 is incident on the diffraction grating G1 at an arbitrary angle $\theta_i$ which is equal to neither a right angle nor the diffraction angle of nth-order diffracted light.

In addition to the effects of the first and second comparative examples, the third comparative example can provide the following effect. Since a light beam emitted by the light-emitting element 1 is incident on the diffraction grating at an arbitrary angle $\theta_i$ other than a right angle, the light source 1 and the light-receiving element 3 can be separated from each other to eliminate the influence of light other than interference light emitted by the light source, and the distance between the scale and head can be shortened, thus realizing a further compact, low-profile structure. Furthermore, since the diffraction grating G3 for mixing light beams and the light-receiving element 3 are arranged to be shifted from each other, the influence of diffracted light other than diffracted light to be used, which emerges from the grating G3 can be eliminated, and a signal with a high S/N ratio can be obtained.

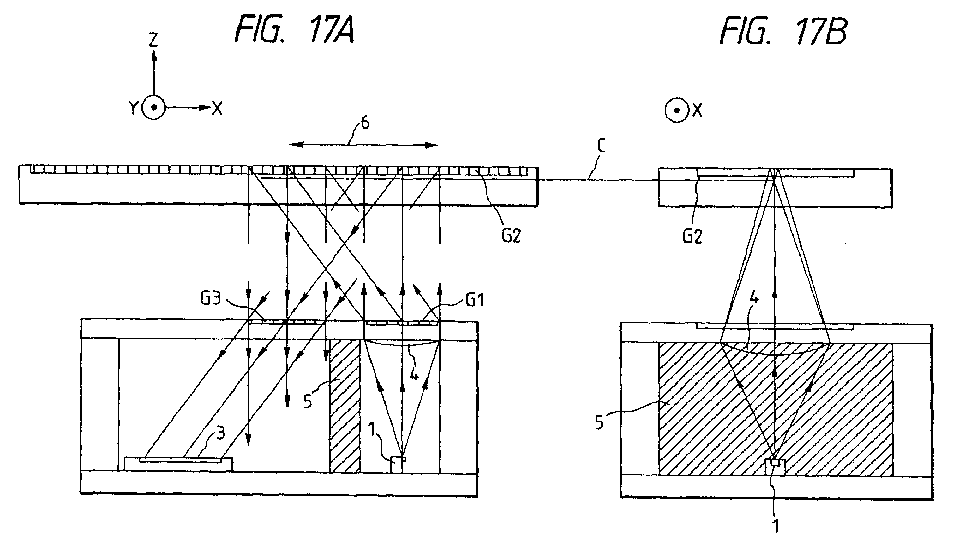

Figs. 17A and 17B are respectively a plan view and a side view showing a fourth comparative example not claimed. The same reference numerals in Figs. 17A and 17B denote the same parts as in the above comparative examples.

In this comparative example, a toric lens 4 condenses a divergent light beam emitted by the light-emitting element in the grating line direction of the diffraction grating G1, and adjusts it to be substantially collimated light in the grating arrangement direction. A light shielding wall 5 shields unnecessary light from the light source. Note that the moving direction of the scale is represented by 6.

The principle and basic arrangement of the optical system are the same as those in the first comparative example. In this comparative example a light beam from the light source is perpendicularly incident on the diffraction grating G1.

In addition to the effects of the first to third comparative examples, this comparative example can provide the following effects.

1) As a light beam to be incident on the light-receiving element, not a light beam which is mixed by the diffraction grating G3 and perpendicularly emerges therefrom, but only a light beam which is diffracted in a direction opposite to the light source is utilized. For this reason, other diffracted light components generated by the diffraction grating G3 can be prevented from becoming incident on the light-receiving element, and a noise-less signal with a high S/N ratio can be output.

2) Since the light source is arranged perpendicularly to the diffraction grating G1, a compact, low-cost encoder which is easy to assemble can be realized.

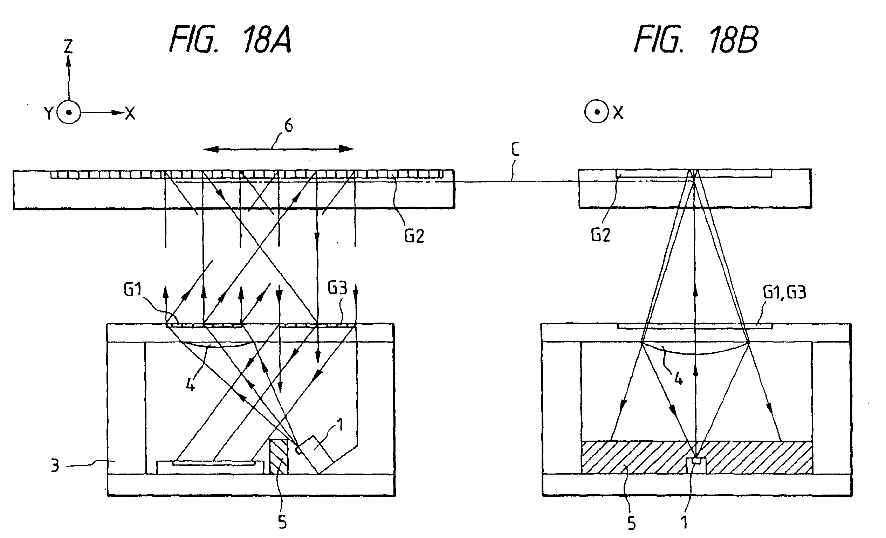

Figs. 18A and 18B are respectively a plan view and a side view showing the only embodiment in which the present invention is applied to an optical displacement measurement device. The same reference numerals in Figs. 18A and 18B denote the same parts as above .

The principle of the optical system will be described below.

A light beam emitted by the light-emitting element 1 is incident on the toric lens 4, and is converted into a light beam which becomes collimated light in the grating arrangement direction and becomes convergent light in the grating line direction. The converted light beam is incident on the diffraction grating G1. The light beam incident on the diffraction grating G1 is split into two light beams, i.e., an nth-order diffracted light beam which is perpendicularly output from the grating surface, and an mth-order diffracted light beam (n < m) which has the same exit angle as the diffraction angle generated when perpendicular light is incident on the lines of the diffraction gratings G2 and G3 (the shape (pitch, duty, and the like) of the lines of the diffraction grating G1 is determined so that the light beam with such a diffraction angle has a higher intensity), and these light beams are incident on the diffraction grating G2.

The other principle and basic arrangement are the same as those in the first comparative example.

In the arrangement of this embodiment, as described above, the incident optical path to the diffraction grating G1 and the light-receiving optical path from the diffraction grating G3 to the light-receiving element 3 cross each other, and the light-shielding wall 5 is arranged not to shield these optical paths.

In addition to the effects of the first to third comparative examples, the only embodiment can provide the following effect.

The light-receiving element and the light-emitting element can be arranged to be separated by a smaller distance than in the above embodiments, and a compact encoder which is easy to assemble and can output a noise-less signal with a high S/N ratio can be realized.

In each of the above embodiment, a Fresnel lens, hologram element, or the like may be used as the optical element.

According to each of the above-mentioned embodiment, when the respective elements are set as described above, an optical displacement sensor, which can easily shield unnecessary light which is emitted by the light-emitting element and reaches the sensor, can obtain a noise-less signal with a high S/N ratio, can obtain displacement information with high precision, and can be rendered compact, can be realized.

## Claims

1. A device for measuring relative displacement information of an object diffraction grating (G2), comprising:

   an illumination system (1) for forming an illumination light beam;
   a splitting diffraction grating (G1) for splitting the illumination light beam from said illumination system into at least two diffracted beams, said splitting diffraction grating (G1) being arranged at a position between the illumination system (1) and the object diffraction grating (G2);
   a mixing diffraction grating (G3) for mixing at least two diffracted beams which have been reflected and diffracted by the object diffraction grating (G2), said mixing diffraction grating (G3) being arranged at a position between a light receiving element (3) and the object diffraction grating (G2) in the vicinity of said splitting diffraction grating (G1) and said mixing diffraction grating (G3) being arranged on the same side of said splitting diffraction grating (G1) with respect to the object diffraction grating (G2);
   said light-receiving element (3) for receiving a light beam mixed by said mixing diffraction grating (G3), relative displacement information of the object diffraction grating (G2) being detected based on the light received by said light-receiving element (3), wherein said illumination system (1) is arranged to irradiate the light beam onto said splitting diffraction grating (G1) with a non-perpendicular inclination relative to said splitting diffraction grating (G1) with respect to a grating arrangement direction of said splitting diffraction grating (G1), wherein said mixing diffraction grating (G3) makes at least two outgoing light beams substantially coincident by diffracting at least one of the light beams reflected and diffracted by said object diffraction grating (G2), wherein the mixing is performed by the coincidence of the outgoing light beams,

   **characterized in that**
   said splitting diffraction grating (G1) and said mixing diffraction grating (G3) are provided as separate gratings;

   the device is arranged so that the mixed beam emerges from said mixing diffraction grating (G3) on the same side with respect to said object diffraction grating (G2) at which said illumination light beam impinges on said splitting diffraction grating, with an inclination to the surface normal of said mixing diffraction grating (G3) in a direction opposite to the inclination of said illumination light beam to the surface normal of said splitting diffraction grating (G1); and

   an illumination optical path of said illumination system (1) to said splitting diffraction grating and a light-receiving optical path of said light-receiving element (3) from said mixing diffraction grating cross each other.

2. A device according to claim 1,
   **characterized in that**
   said light-receiving element (3) is arranged to receive the light beam with an inclination relative to said mixing diffraction grating (G3) with respect to a grating arrangement direction of said mixing diffraction grating (G3).

3. A device according to claim 1 or 2,
   **characterized in that**
   said splitting diffraction grating (G1) and said mixing diffraction grating (G3) are arranged on a single board.

4. A device according to claim 1 or 2,
   **characterized by**
   an optical element (4) for shaping the light beams to be split by said splitting diffraction grating (G1) so that the light beams diverge in the grating arrangement direction of said splitting diffraction grating (G1) and converge in a direction perpendicular to the grating arrangement direction of said splitting diffraction grating (G1).

5. A device according to claim 4,
   **characterized in that**
   said optical element (4) comprises a cylindrical lens arranged on a light beam incidence side of said splitting diffraction grating (G1).

6. A device according to claim 1 or 2,
   **characterized by**
   an optical element (4) for shaping the light beams to be split by said splitting diffraction grating (G1) so that the light beams are collimated in the grating arrangement direction of said splitting diffraction grating (G1) and are condensed in a direction perpendicular to the grating arrangement direction of said splitting diffraction grating (G1).

7. A device according to claim 6,
   **characterized in that**

said optical element (4) comprises a toric lens arranged on a light beam incidence side of said splitting diffraction grating (G1).

8. A device according to claim 6,
   **characterized in that**
   said optical element (4) comprises an optical unit which is arranged on a light beam incidence side of said light beam splitting element (G1) and is constituted of a cylindrical lens and a collimator lens.

**Patentansprüche**

1. Vorrichtung zum Messen einer relativen Verschiebung eines Objektbeugungsgitters (G2), welche folgendes aufweist:

   ein Beleuchtungssystem (1) zur Erzeugung eines Lichtstrahls, ein Aufspaltbeugungsgitter (G1) zum Aufspalten des vom Beleuchtungssystem erzeugten Lichtstrahls in mindestens zwei gebeugte Lichtstrahlen, wobei das Aufspaltbeugungsgitter (G1) zwischen dem Beleuchtungssystem (1) und dem Objektbeugungsgitter (G2) angeordnet ist,
   ein Mischbeugungsgitter (G3) zum Mischen von mindestens zwei vom Objektbeugungsgitter (G2) reflektierten und gebeugten Lichtstrahlen, wobei das Mischbeugungsgitter (G3) zwischen einem Lichtempfangselement (3) und dem Objektbeugungsgitter (G2) in der Nähe Aufspaltbeugungsgitters (G1) angeordnet ist und das Mischbeugungsgitter (G3) in bezug auf das Objektbeugungsgitter auf der gleichen Seite wie das Aufspaltbeugungsgitter (G1) angeordnet ist,

   wobei vom Lichtempfangselement (3) zum Empfangen eines vom Mischbeugungsgitter (G3) gemischten Strahls eine relative Verschiebung des Objektbeugungsgitters (G2) auf der Grundlage des empfangenen Lichts erfaßt wird, wobei das Beleuchtungssystem (1) den Lichtstrahl nicht lotrecht zur Gitteranordnungsrichtung des Aufspaltbeugungsgitters (G1) auf dieses emittiert, wobei das Mischbeugungsgitter (G3) durch Beugen von mindestens einem der vom Objektbeugungsgitter (G2) reflektierten und gebeugten Lichtstrahlen mindestens zwei ausgehende Lichtstrahlen im wesentlichen in Übereinstimmung bringt und **dadurch** das Mischen der ausgehenden Lichtstrahlen erfolgt,
   **dadurch gekennzeichnet, daß**
   das Aufspaltbeugungsgitter (G1) und das Mischbeugungsgitter (G3) als separate Gitter angeordnet sind,
   die Vorrichtung so angeordnet ist, daß in bezug auf das Objektbeugungsgitter (G2) der gemischte Strahl das Mischbeugungsgitter (G3) auf der gleichen Seite verläßt, auf welcher der Beleuchtungslichtstrahl auf das Aufspaltbeugungsgitter (G1) trifft, aber entgegengesetzt zur Flächennormalen des Mischbeugungsgitters (G3) geneigt ist, und
der optische Weg vom Beleuchtungssystem (1) zum Aufspaltbeugungsgitter (G1) den optischen Weg vom Mischbeugungsgitter (G3) zum Lichtempfangselement (3) kreuzt.

2. Vorrichtung gemäß Anspruch 1, **dadurch gekennzeichnet, daß** das Lichtempfangselement (3) den Lichtstrahl unter einer bestimmten Neigung zur Anordnungsrichtung des Mischbeugungsgitters (G3) empfängt.

3. Vorrichtung gemäß Anspruch 1 oder 2, **dadurch gekennzeichnet, daß** das Aufspaltbeugungsgitter (G1) und das Mischbeugungsgitter (G3) auf einer einzigen Platte angeordnet sind.

4. Vorrichtung gemäß Anspruch 1 oder 2, **gekennzeichnet durch** ein optisches Element (4), welches die vom Aufspaltbeugungsgitter (G1) aufzuspaltenden Lichtstrahlen so formt, daß diese in Gitteranordnungsrichtung des Aufspaltbeugungsgitters (G1) divergieren und im rechten Winkel zur Gitteranordnungsrichtung des Aufspaltbeugungsgitters (G1) konvergieren.

5. Vorrichtung gemäß Anspruch 4, **dadurch gekennzeichnet, daß** das optische Element (4) eine auf der Lichtstrahlauftreffseite des Aufspaltbeugungsgitters (G1) angeordnete zylindrische Linse aufweist.

6. Vorrichtung gemäß Anspruch 1 oder 2, **gekennzeichnet durch** ein optisches Element (4), welches die vom Aufspaltbeugungsgitter (G1) aufzuspaltenden Lichtstrahlen so formt, daß diese in Gitteranordnungsrichtung des Aufspaltbeugungsgitters (G1) kollimiert und im rechten Winkel zur Gitteranordnungsrichtung des Aufspaltbeugungsgitters (G1) kondensiert werden.

7. Vorrichtung gemäß Anspruch 6, **dadurch gekennzeichnet, daß** das optische Element (4) eine auf der Lichtstrahlauftreffseite des Aufspaltbeugungsgitters (G1) angeordnete torische Linse aufweist.

8. Vorrichtung gemäß Anspruch 6, **dadurch gekennzeichnet, daß** das optische Element (4) eine auf der Lichtstrahlauftreffseite des Aufspaltbeugungsgitters (G1) angeordnete optische Einheit aus einer zylindrischen Linse und einer Kollimatorlinse bildet.

**Revendications**

1. Dispositif destiné à mesurer une information de déplacement relatif d'un réseau (G2) de diffraction d'un objet, comportant :

   un système d'illumination (1) destiné à former un faisceau lumineux d'illumination ;
   un réseau de diffraction diviseur (G1) destiné à diviser le faisceau lumineux d'illumination provenant dudit système d'illumination en au moins deux faisceaux diffractés, ledit réseau de diffraction diviseur (G1) étant agencé dans une position située entre le système d'illumination (1) et le réseau de diffraction (G2) de l'objet ;
   un réseau de diffraction mélangeur (G3) destiné à mélanger au moins deux faisceaux diffractés qui ont été réfléchis et diffractés par le réseau de diffraction (G2) de l'objet, ledit réseau de diffraction mélangeur (G3) étant agencé dans une position située entre un élément (3) de réception de lumière et le réseau de diffraction (G2) de l'objet au voisinage dudit réseau de diffraction diviseur (G1) ; et ledit réseau de diffraction mélangeur (G3) étant agencé du même côté dudit réseau de diffraction diviseur (G1) par rapport au réseau de diffraction (G2) de l'objet ;
   ledit élément (3) de réception de lumière destiné à recevoir un faisceau lumineux mélangé par ledit réseau de diffraction mélangeur (G3), une information de déplacement relatif du réseau de diffraction (G2) de l'objet étant détectée sur la base de la lumière reçue par ledit élément (3) de réception de lumière, dans lequel ledit système (1) d'illumination est agencé de façon à irradier ledit réseau de diffraction diviseur (G1) avec le faisceau lumineux sous une inclinaison non perpendiculaire audit réseau de diffraction diviseur (G1) par rapport à une direction d'agencement dudit réseau de diffraction diviseur (G1), dans lequel ledit réseau de diffraction mélangeur (G3) fait sensiblement coïncider au moins deux faisceaux lumineux de sortie en diffractant au moins l'un des faisceaux lumineux réfléchis et diffractés par ledit réseau de diffraction (G2) de l'objet, dans lequel le mélange est réalisé par la coïncidence des faisceaux lumineux de sortie,

   **caractérisé en ce que**
   ledit réseau de diffraction diviseur (G1) et ledit réseau de diffraction mélangeur (G3) sont prévus sous la forme de réseaux séparés ;
   le dispositif est agencé de façon que le faisceau lumineux mélangé émerge dudit réseau de diffraction mélangeur (G3) sur le même côté par rapport audit réseau de diffraction (G2) de l'objet que celui auquel ledit faisceau lumineux d'illumination tombe sur ledit réseau de diffraction diviseur, avec une inclinaison par rapport à la normale à la surface dudit réseau de diffraction mélangeur (G3) dans une direction opposée à l'inclinaison dudit faisceau lumineux d'illumination par rapport à la normale à la surface dudit réseau de diffraction diviseur (G1) ; et
   un chemin optique d'illumination dudit système d'illumination (1) vers ledit réseau de diffraction diviseur et un chemin optique de réception de lumière dudit élément (3) de réception de lumière revenant dudit réseau de diffraction mélangeur se croisent.

2. Dispositif selon la revendication 1,
   **caractérisé en ce que**
   ledit élément (3) de réception de lumière est agencé de façon à recevoir le faisceau lumineux sous une inclinaison relative audit réseau de diffraction mélangeur (G3) par rapport à une direction d'agencement dudit réseau de diffraction mélangeur (G3).

3. Dispositif selon la revendication 1 ou 2,
   **caractérisé en ce que**
   ledit réseau de diffraction diviseur (G1) et ledit réseau de diffraction mélangeur (G3) sont agencés sur une seule plaquette.

4. Dispositif selon la revendication 1 ou 2,
   **caractérisé par**
   un élément optique (4) destiné à conformer les faisceaux lumineux devant être divisés par ledit réseau de diffraction diviseur (G1), afin que les faisceaux lumineux divergent dans la direction d'agencement dudit réseau de diffraction diviseur (G1) et convergent dans une direction perpendiculaire à la direction d'agencement dudit réseau de diffraction diviseur (G1).

5. Dispositif selon la revendication 4,
   **caractérisé en ce que**
   ledit élément optique (4) comporte une lentille cylindrique agencée sur un côté d'incidence de faisceau lumineux dudit réseau de diffraction diviseur (G1).

6. Dispositif selon la revendication 1 ou 2,
   **caractérisé par**
   un élément optique (4) destiné à conformer les faisceaux lumineux devant être divisés par ledit réseau de diffraction diviseur (G1), afin que les faisceaux lumineux soient collimatés dans la direction d'agencement dudit réseau de diffraction diviseur (G1) et soient condensés dans une direction perpendiculaire à la direction d'agencement dudit réseau de diffraction diviseur (G1).

**7.** Dispositif selon la revendication 6, **caractérisé en ce que** ledit élément optique (4) comprend une lentille torique agencée sur un côté d'incidence de faisceau lumineux dudit réseau de diffraction diviseur (G1).

**8.** Dispositif selon la revendication 6, **caractérisé en ce que** ledit élément optique (4) comporte une unité optique qui est agencée sur un côté d'incidence de faisceau lumineux dudit élément (G1) de division de faisceau lumineux et est constitué d'une lentille cylindrique et d'une lentille collimatrice.

FIG. 1B
PRIOR ART

FIG. 1A
PRIOR ART

12

FIG. 2A  PRIOR ART

FIG. 2B  PRIOR ART

EP 0 672 891 B2

# FIG. 3
## PRIOR ART

FIG. 4

FIG. 5A

FIG. 5B

EP 0 672 891 B2

FIG. 6

FIG. 7

EP 0 672 891 B2

FIG. 8

FIG. 9

Y

Z

G2

ø → X

G3

TWO LIGHT
BEAMS SPLIT

G1

LIGHT
RECEIVING
ELEMENT

INTERFERENCE
FRINGES

LIGHT EMITTING
ELEMENT

EP 0 672 891 B2

FIG. 10A

ANGLE $\theta$ (SEC.) BETWEEN INTERFERENCE TWO LIGHT BEAMS

AZIMUTH ANGLE $\eta$ (SEC.)

WAVELENGTH OF LIGHT EMITTING SOURCE / GRATING PITCH $\left(\dfrac{\lambda}{P}\right)$

$\theta = \dfrac{2\lambda}{P}\eta$

FIG. 10B

ANGLE $\theta$ (SEC.) BETWEEN INTERFERENCE TWO LIGHT BEAMS

AZIMUTH ANGLE $\eta$ (SEC.) $\left(\dfrac{\lambda}{P} = 0.4875\right)$

21

## FIG. 11A

## FIG. 11B

## FIG. 12A

CROSSING POINT OF INTERFERENCE TWO LIGHT BEAMS

AZIMUTH ANGLE $\eta$ (SEC.)

$\dfrac{\lambda}{P}$

## FIG. 12B

CROSSING POINT OF INTERFERENCE TWO LIGHT BEAMS

AZIMUTH ANGLE $\eta$ (MIN.)  $\left( \dfrac{\lambda}{P} = 0.4875 \right)$

23

## FIG. 13A

## FIG. 13B

FIG. 14

EP 0 672 891 B2

FIG. 15A

FIG. 15B

EP 0 672 891 B2

# FIG. 16A

# FIG. 16B

EP 0 672 891 B2

*FIG. 17A*

*FIG. 17B*

EP 0 672 891 B2

FIG. 18A

FIG. 18B

EP 0 672 891 B2